# EUROPÄISCHE PATENTSCHRIFT

(11) **EP 3 696 385 B1**
(45) Veröffentlichungstag und Bekanntmachung des Hinweises auf die Patenterteilung: **10.01.2024**
(21) Anmeldenummer: 19209665.9
(22) Anmeldetag: 18.11.2019
(51) Int. Cl.: F01P 11/12

(54) **KÜHLEINRICHTUNG FÜR EINE LANDWIRTSCHAFTLICHE ARBEITSMASCHINE**
COOLING DEVICE FOR AN AGRICULTURAL MACHINE
DISPOSITIF DE REFROIDISSEMENT POUR UNE MACHINE DE TRAVAIL AGRICOLE

(30) Priorität: 12.02.2019 DE 102019103410
(43) Veröffentlichungstag der Anmeldung: 19.08.2020
(73) Patentinhaber: CLAAS Selbstfahrende Erntemaschinen GmbH, 33428 Harsewinkel (DE)
(72) Erfinder: Evermann, Bernhard, 59320 Ennigerloh (DE); Schulte, Felix, 33397 Rietberg (DE)
(74) Vertreter: CLAAS Gruppe

(56) Entgegenhaltungen:
- EP-A1- 0 566 981
- EP-A1- 2 546 492
- US-A- 3 837 149
- US-A1- 2011 011 259

## Beschreibung

Die vorliegende Anmeldung betrifft eine Kühleinrichtung für eine landwirtschaftliche Erntemaschine gemäß dem Oberbegriff von Anspruch 1.

Die Kühleinrichtung umfasst einen rotierbaren Kühlerkorb, der mit mindestens einem Abstreifer und mindestens einem Gegenkamm ausgestattet ist. Bei landwirtschaftlichen Erntemaschinen ist es bekannt, dass zur Kühlung insbesondere der Verbrennungskraftmaschine ein Kühlluftvolumenstrom zugeführt wird, mittels dessen die Verbrennungskraftmaschine sowie gegebenenfalls weitere Maschinenteile kühlbar sind. Da im Zuge eines Erntevorgangs die Umgebungsluft mit einer hohen Anzahl von Schmutzpartikeln, insbesondere Staub und dergleichen, belastet sein kann, ist es erforderlich, den Kühlluftvolumenstrom vor seiner Zuleitung zu der Verbrennungskraftmaschine zu filtern. Der Kühlerkorb stellt gewissermaßen eine erste Filterstufe dar, die der Kühlluftvolumenstrom passieren muss, bevor er zu der Verbrennungskraftmaschine gelangt.

Der Kühlerkorb ist rotierbar um eine Rotationsachse gelagert und drehantreibbar, sodass er um die Rotationsachse rotieren kann. Diese Funktionalität ist vorteilhaft, um eine Siebfläche des Kühlerkorbs, mittels derer der Kühlluftvolumenstrom siebbar ist, besonders einfach systematisch abzureinigen. Dem liegt die Überlegung zugrunde, dass die beschriebenen Schmutzpartikel die Siebfläche des Kühlerkorbs sukzessive zusetzen und hierdurch einen Strömungswiderstand für den Kühlluftvolumenstrom erhöhen. Daher ist es typischerweise erforderlich, die Siebfläche fortwährend abzureinigen, sodass ein effektiver Strömungsquerschnitt, der dem Kühlluftvolumenstrom in Summe zur Durchströmung der Siebfläche zur Verfügung steht, auf einem bestimmten Mindestniveau gehalten werden kann. Die Rotierbarkeit des Kühlerkorbs ermöglicht es, diesen mit einer stationären Absaugeinrichtung zu kombinieren, an der im Zuge der Rotation des Kühlerkorbs fortwährend dessen Siebfläche entlang geführt wird, sodass anhaftende Schmutzpartikel absaugbar sind. Weiterhin bewirkt die Rotation des Kühlerkorbs eine Zentrifugalkraft auf die an der Siebfläche anhaftenden Schmutzpartikel, wodurch auch unabhängig von einer Absaugeinrichtung eine gewisse Reinigungsleistung erzielt wird, indem die Schmutzpartikel infolge der wirkenden Zentrifugalkraft radial bezogen auf die Rotationsachse nach außen hin "weggeschleudert" werden.

Der Kühlerkorb ist topfförmig ausgebildet, wobei er eine (typischerweise ebene) Stirnfläche sowie eine sich unter einem Winkel (typischerweise 90°) zu der Stirnfläche erstreckende, umlaufende Umfangsfläche aufweist. Die Stirnfläche und die Umfangsfläche des Kühlerkorbs sind zumindest teilweise, vorzugsweise vollständig, von der Siebfläche gebildet. Der Abstreifer wirkt mit dem Kühlerkorb zusammen und ist hierzu auf der Stirnfläche und der Umfangsfläche des Kühlerkorbs angeordnet. Er ist derart fest mit dem Kühlerkorb verbunden, dass er im Zuge der Rotation des Kühlerkorbs mit selbigem mitrotiert. Der Gegenkamm ist dazu vorgesehen, mit dem Abstreifer zusammenzuwirken. Er ist - relativ zu dem Kühlerkorb betrachtet - ortsfest angeordnet, sodass der Kühlerkorb mitsamt dem Abstreifer im Zuge der Rotation des Kühlerkorbs relativ zu dem Gegenkamm bewegt wird. Dabei ist der Gegenkamm derart angeordnet, dass der Abstreifer bzw. zumindest ein Teil desselben im Zuge der Rotation des Kühlerkorbs den Gegenkamm zyklisch passiert, wobei es jeweils zu einem Eingriff des Gegenkamms mit dem Abstreifer kommt. Hierzu umfasst der Abstreifer eine Mehrzahl voneinander beabstandeter Erhebungen, die komplementär zu einer Mehrzahl von Fingern ausgebildet sind, die an dem Gegenkamm angeordnet sind. Im Zuge der Rotation des Kühlerkorbs sind mithin die Finger des Gegenkamms und die Erhebungen des Abstreifers dazu geeignet, miteinander zu kämmen, sodass die Finger des Gegenkamms Zwischenräume zwischen benachbarten Erhebungen des mit dem Kühlerkorb mitrotierenden Abstreifers durchsetzen.

Eine Kühleinrichtung der eingangs beschriebenen Art ist im Stand der Technik bereits bekannt. Hierzu wird auf die Europäische Patentschrift EP 0 566 981 B1 verwiesen. Diese beschreibt eine Kühleinrichtung, bei der eine in sich kreisförmige, ebene Siebfläche um eine zentrale Rotationsachse rotiert wird. Auf der Siebfläche sind zwei sich radial bezogen auf die Rotationsachse erstreckende Abstreifer angeordnet, die jeweils über eine Mehrzahl äquidistanter Erhebungen verfügen. Die Abstreifer wirken jeweils mit einem Gegenkamm zusammen, der ortsfest bezogen auf die rotierbare Siebfläche angeordnet ist. Dies führt dazu, dass die Abstreifer pro Umdrehung der Siebfläche jeweils einmal mit dem Gegenkamm eingreifen, wobei Finger des Gegenkamms Zwischenräume, die sich zwischen den benachbarten Erhebungen der Abstreifer erstrecken, durchsetzen. Dies hat zur Folge, dass mittels der Abstreifer "eingefangenes" Material wie beispielsweise Blätter geernteter Pflanzen oder sonstige Pflanzenreste mittels Zusammenwirkens der Erhebungen und der Finger gewissermaßen zerschnitten oder zerschlagen wird. Die dadurch erzielte Zerkleinerung der Pflanzenreste erleichtert deren Entfernung von der Siebfläche, insbesondere mittels Absaugung mittels einer Absaugeinrichtung.

Die bekannte Kühleinrichtung ist insofern nachteilig, als eine mechanische Belastung der Siebfläche im Zuge des Eingriffs von Gegenkamm und Abstreifer vergleichsweise groß ist. Insbesondere kann es an den Erhebungen des Abstreifers zu einem Materialstau kommen, der eine hohe Spitzenbelastung auf den Abstreifer im Zuge des Eingriffs mit dem Gegenkamm bewirken kann. Infolgedessen kann es beispielsweise zu einer Beschädigung der Siebfläche kommen, die daraufhin ihre Funktion verliert, sodass wiederum die gewünschte Siebwirkung betreffend den mit Schmutzpartikeln beladenen Kühlluftvolumenstrom zumindest teilweise verloren geht.

Der vorliegenden Anmeldung liegt mithin die Aufgabe zugrunde, eine Kühleinrichtung bereitzustellen, die gegenüber dem Stand der Technik verbessert ist.

Die zugrunde liegende Aufgabe wird erfindungsgemäß mittels einer Kühleinrichtung mit den Merkmalen des Anspruchs 1 gelöst. Vorteilhafte Ausgestaltungen ergeben sich aus den Unteransprüchen 2 bis 11.

Die erfindungsgemäße Kühleinrichtung ist dadurch gekennzeichnet, dass mindestens eine Erhebung des Abstreifers von einem Konusstumpf gebildet ist. Dieser Konusstumpf ist vorteilhafterweise derart ausgebildet, dass er sich ausgehend von einer Basis des Abstreifers, die der Siebfläche des Kühlerkorbs zugewandt ist, in eine Richtung von der Siebfläche weg gerichtet verjüngt. Auf diese Weise bildet eine äußere Mantelfläche des Kegelstumpfs gewissermaßen eine von der Siebfläche weg führende "Rampe", mittels derer mittels des Abstreifers gesammeltes Material von der Siebfläche weg führbar ist.

Die erfindungsgemäße Kühleinrichtung hat viele Vorteile. Die Ausgestaltung mindestens einer Erhebung, vorzugsweise einer Mehrzahl von Erhebungen, weiter vorzugsweise sämtlicher Erhebungen, in Form eines Konusstumpfs hat zur Folge, dass Pflanzenreste, die mittels des Abstreifers im Zuge der Rotation des Kühlerkorbs erfasst werden, beim Eingriff mit dem Gegenkamm über die bezogen auf die Basis des Abstreifers schräge Mantelfläche des Konusstumpfs in die von der Siebfläche weg gerichtete Richtung abgeleitet werden können. Hierzu bedarf es einer vergleichsweise geringen Kraftwirkung, die einer mechanischen Überlastung der Siebfläche und einer damit einhergehenden Beschädigung derselben vorbeugt. Insbesondere ist das im Stand der Technik zu beobachtende Stauverhalten an den Erhebungen des dortigen Abstreifers vermieden.

In einer besonders bevorzugten Ausgestaltung der erfindungsgemäßen Kühleinrichtung weist mindestens ein Konusstumpf eine Ausnehmung auf, infolge derer der Konusstumpf zumindest teilhohl ausgebildet ist. Diese Ausgestaltung hat den besonderen Vorteil, dass die äußere Mantelfläche des Konusstumpfs an eine innere Mantelfläche grenzt, die durch die Ausnehmung bedingt ist. Dies gilt zumindest für den Fall, dass sich die Ausnehmung ausgehend von einem von der Siebfläche abgewandten Ende des Konusstumpfs in Richtung auf die Siebfläche zu erstreckt. An dem Übergang der äußeren Mantelfläche und der inneren Mantelfläche weist der Konusstumpf sodann eine umlaufende Schneidkante auf, mittels derer Pflanzenreste im Zuge des Eingriffs des Abstreifers mit dem Gegenkamm besonders gut zerkleinerbar sind. Insbesondere können größere Pflanzenreste wie beispielsweise Blätter der geernteten Pflanzen zerschnitten und auf diese Weise zerkleinert werden. Wie eingangs dargelegt, kann diese Zerkleinerung im Hinblick auf eine mögliche Absaugung der Pflanzenreste mittels einer Absaugeinrichtung vorteilhaft sein. Die Ausnehmung des Konusstumpfs dient dazu, die Schneidkante an dem Übergang von der äußeren Mantelfläche hin zu der inneren Mantelfläche der Ausnehmung auszubilden. In besonders bevorzugter Art und Weise erstreckt sich eine Mittelachse der vorzugsweise einen runden Querschnitt aufweisenden Ausnehmung senkrecht zu der Siebfläche.

In einer weiterhin vorteilhaften Ausgestaltung der erfindungsgemäßen Kühleinrichtung durchdringt die Ausnehmung den Abstreifer im Bereich des Konusstumpfs vollständig, sodass der Konusstumpf vollhohl ausgebildet ist. Gegenüber einer teilhohlen Ausgestaltung, bei der die Ausnehmung beispielsweise in Form einer Sackbohrung ausgebildet sein kann, erlaubt die vollhohle Ausführung, bei der der Konusstumpf von seinem der Siebfläche abgewandten Ende bis hin zu dem der Siebfläche zugewandten Ende des Abstreifers vollständig durchdrungen ist, eine Luftströmung durch den Konusstumpf. Hierbei kann es insbesondere vermieden werden, dass der Konusstumpf sich im Zuge des Betriebs der Erntemaschine zusetzt, wobei insbesondere in Kombination mit einer Absaugeinrichtung eine Saugwirkung auf die Ausnehmung ausgeübt und auf diese Weise eventuelles, in der Ausnehmung angesammeltes Material abgesaugt werden kann. Ebenfalls bietet die Ausnehmung ein Ausweichvolumen für Pflanzenreste, die im Zuge eines Eingriffs mit dem Gegenkamm verdrängt werden. Die Möglichkeit für das Material, in die Ausnehmung eines jeweiligen Kegelstumpfs einzudringen, führt zu einer weiterhin verminderten Stauwirkung an dem Abstreifer.

Die erfindungsgemäße Kühleinrichtung weiter ausgestaltend schließen eine innere Mantelfläche des Konusstumpfs, die dieser im Bereich der Ausnehmung aufweist, und eine äußere Mantelfläche des Konusstumpfs gemeinsam einen Winkel von mindestens 35°, vorzugsweise mindestens 40°, weiter vorzugsweise mindestens 45°, ein. Dabei gilt, dass eine umso flachere Ausgestaltung des Winkels zwischen innerer Mantelfläche und äußerer Mantelfläche in aller Regel mit einem umso flacheren Anstieg des Konusstumpfs ausgehend von seiner Basis einhergeht. Der flachere Anstieg eines jeden Konusstumpfs führt zu einer besseren Ableitwirkung des Konusstumpfs und mithin zu einer verminderten Stauwirkung im Zuge des Eingriffs mit dem Gegenkamm. Im Interesse einer möglichst scharfen und mithin effektiven Schneidkante an dem oberen Ende des Konusstumpfs ist es gleichwohl vorteilhaft, wenn der Winkel zwischen innerer Mantelfläche und äußerer Mantelfläche des Konusstumpfs einen Wert von 60°, vorzugsweise 55°, weiter vorzugsweise 50°, nicht übersteigt.

Die erfindungsgemäße Kühleinrichtung weiter ausgestaltend ist der Konusstumpf von einem Kegelstumpf gebildet. Dieser ist fertigungstechnisch besonders einfach herzustellen. Insbesondere ist es denkbar, einen Kegelstumpf in besonders einfacher Weise mittels einer Stanzung auszubilden, die den Abstreifer in Richtung von der Siebfläche weg gerichtet durchdringt. Die Ausgestaltung des Kegelstumpfs mittels einer Stanzung ist gleichwohl auch unabhängig von dessen Form als Kegelstumpf grundsätzlich vorteilhaft. Die Stanzung bietet nämlich den Vorteil, dass das nach außen, das heißt das von der Siebfläche weg gerichtete Material besonders einfach in eine Konus- oder Kegelstumpfform bringbar ist, wodurch der vorstehend als vorteilhaft beschriebene Ableiteffekt für das mittels des Abstreifers erfasste Material erzeugbar ist. Letzterer ist durch die für einen Konusstumpf ebenso wie für einen Kegelstumpf charakteristische, gegenüber der Basis des Abstreifers geneigt ausgebildete äußere Mantelfläche bedingt.

Unabhängig von der Ausgestaltung der Erhebungen des Abstreifers, jedoch gleichwohl in besonders bevorzugter Weise in Kombination mit der vorstehend beschriebenen Ausgestaltung der Erhebungen, kann es besonders vorteilhaft sein, wenn eine Längsachse des Gegenkamms und eine Längsachse eines Wirkungsabschnitts des Abstreifers, der unmittelbar mit dem Gegenkamm im Zuge der Rotation des Kühlerkorbs zusammenwirkt, geneigt gegeneinander ausgebildet sind. Diese Neigung schlägt sich vorzugsweise darin nieder, dass Projektionen der Längsachsen von Gegenkamm und Abstreifer in die mit dem Abstreifer zusammenwirkende Siebfläche gemeinsam einen Winkel von mindestens 10°, vorzugsweise mindestens 15°, weiter vorzugsweise mindestens 20°, einschließen. Die geneigte Ausgestaltung von Gegenkamm und Abstreifer relativ zueinander hat den technischen Effekt, dass der Abstreifer bzw. der jeweils betroffene Wirkungsabschnitt desselben, der mit dem Gegenkamm zusammenwirkt, im Zuge des Passierens des Gegenkamms über seine Länge hinweg einen sukzessiven Eingriff mit dem Gegenkamm ausbildet. Mit anderen Worten durchsetzen die Finger des Gegenkamms nicht gleichzeitig die jeweils zugeordneten Zwischenräume zwischen benachbarten Erhebungen des Abstreifers, sondern durchsetzen die Zwischenräume gewissermaßen zeitlich nacheinander. Insbesondere ist es denkbar, dass zunächst ein radial bezogen auf die Rotationsachse des Kühlerkorbs am weitesten innenliegender Zwischenraum zwischen den beiden am weitesten radial innenliegenden Erhebungen des Abstreifers als erstes von einem am weitesten radial innenliegenden Finger des Gegenkamms durchsetzt wird. Im Zuge der weiteren Rotation des Kühlerkorbs sowie des damit verbundenen Abstreifers können dann beispielsweise sukzessive die einzelnen Zwischenräume nacheinander radial betrachtet von innen nach außen von den jeweils komplementären Fingern des Gegenkamms durchsetzt werden. Ein gleichzeitiges Zusammenwirken sämtlicher Finger des Gegenkamms mit sämtlichen Zwischenräumen des Abstreifers "auf einen Schlag" wird hierdurch vermieden, wodurch gleichermaßen die mechanische Belastung des Abstreifers und mithin der Siebfläche gegenüber dem Stand der Technik reduziert wird.

Alternativ oder zusätzlich zu einer Anordnung von Gegenkamm und Abstreifer gegeneinander geneigt es ebenso denkbar, den Gegenkamm und/oder den Abstreifer gekrümmt auszugestalten, um einen Eingriffszeitraum der einzelnen Finger des Gegenkamms mit den jeweils zugehörigen Zwischenräumen des Abstreifers zu entzerren und insbesondere ein schlagartiges, gleichzeitiges Eingreifen mehrerer oder sogar sämtlicher Finger des Gegenkamms mit den Zwischenräumen des Abstreifers zu vermeiden.

Wenngleich eine gekrümmte Ausgestaltung sowohl des Gegenkamms als auch des Abstreifers grundsätzlich denkbar ist, ist es gleichwohl von Vorteil, wenn sowohl der Gegenkamm als auch zumindest ein mit der Stirnfläche des Kühlerkorbs korrespondierender Wirkungsabschnitt des Abstreifers in sich gerade ausgebildet sind. Dies ist insbesondere unter fertigungstechnischen Gesichtspunkten von Vorteil.

Sofern insbesondere der mit der Stirnfläche des Kühlerkorbs korrespondierende Wirkungsabschnitt des Abstreifers gerade ausgebildet ist, ist es von besonderem Vorteil, wenn eine Längsachse desselben unter einer Ausmitte bezogen auf die Rotationsachse des Kühlerkorbs verläuft. Mit anderen Worten verläuft bei einer solchen Ausgestaltung der Abstreifer ausmittig bezogen auf die Rotationsachse. Diese Ausgestaltung ist besonders gut geeignet, die gewünschte Entzerrung der Eingriffszeitpunkte der einzelnen Finger des Gegenkamms mit den zugeordneten Zwischenräumen des Abstreifers zu bewirken. Ein entsprechendes Beispiel ist nachstehend im Zusammenhang mit dem Ausführungsbeispiel veranschaulicht.

In einer weiterhin vorteilhaften Ausgestaltung der erfindungsgemäßen Kühleinrichtung weist der Gegenkamm mindestens zwei Langlöcher auf, mittels derer ein Abstand des Gegenkamms zu der jeweils zugeordneten Siebfläche einstellbar ist. Auf diese Weise ist insbesondere auch ein Abstand zwischen dem Gegenkamm und dem Abstreifer einstellbar, wodurch die gemeinsame Wirkung von Gegenkamm und Abstreifer einstellbar ist.

Weiterhin ist eine solche Ausgestaltung der Kühleinrichtung von besonderem Vorteil, die mindestens eine Absaugeinrichtung umfasst, mittels derer an der Siebfläche anhaftende Partikel absaugbar sind. Die Funktionsweise einer solchen Absaugeinrichtung ist vorstehend bereits dargelegt. Besonders vorteilhaft ist eine Ausgestaltung, bei der die Absaugeinrichtung mindestens ein Gehäuse aufweist, das sich in radiale Richtung bezogen auf die Stirnfläche des Kühlerkorbs erstreckt und dabei den Radius des Kühlerkorbs vollständig überdeckt. Auf diese Weise ist es besonders einfach möglich, einen mittels der Absaugeinrichtung erzeugten Unterdruck im Zuge der Rotation des Kühlerkorbs um die Rotationsachse über die gesamte Stirnfläche hinweg aufzubringen. Zudem ist es vorteilhaft, wenn das Gehäuse auch mit der Umfangsfläche des Kühlerkorbs zusammenwirkt, sodass gleichermaßen an der dortigen Siebfläche anhaftende Partikel mittels der Absaugeinrichtung absaugbar sind.

Vorteilhafterweise ist der Gegenkamm unmittelbar an dem Gehäuse der Absaugeinrichtung angeordnet, wobei er vorzugsweise an einer Vorderseite des Gehäuses angeordnet ist. Besagte Vorderseite beschreibt diejenige Seite des Gehäuses der Absaugeinrichtung, die der Abstreifer im Zuge der Rotation des Kühlerkorbs als erstes passiert. Diese Ausgestaltung hat den Vorteil, dass eine zerkleinernde Wirkung des Eingriffs von Gegenkamm und Abstreifer auf die Pflanzenreste stattfindet, wenn der Abstreifer gerade in Eingriff mit dem Gehäuse der Absaugeinrichtung tritt. Auf diese Weise können zerkleinerte Pflanzenreste, die der Abstreifer im Weiteren "mitschleppt" unmittelbar mittels der Absaugeinrichtung an dem Abstreifer abgesogen werden.

Die Erfindung ist nachstehend anhand eines Ausführungsbeispiels, das in den Figuren dargestellt ist, näher erläutert. Es zeigt:
- Fig. 1:: Einen Querschnitt durch eine Erntemaschine mit einer erfindungsgemäßen Kühleinrichtung,
- Fig. 2:: Eine perspektivische Ansicht der Kühleinrichtung gemäß Figur 1,
- Fig. 3:: Ein Detail der Kühleinrichtung gemäß Figur 2,
- Fig. 4:: Ein weiteres Detail der Kühleinrichtung gemäß Figur 2,
- Fig. 5:: Ein Detail eines Abstreifers der Kühleinrichtung gemäß Figur 2,
- Fig. 6:: Ein schematischer Querschnitt durch einen auf einer Siebfläche aufliegenden Abstreifer gemäß Figur 5 und
- Fig. 7:: Eine schematische Draufsicht des Abstreifers gemäß Figur 6.

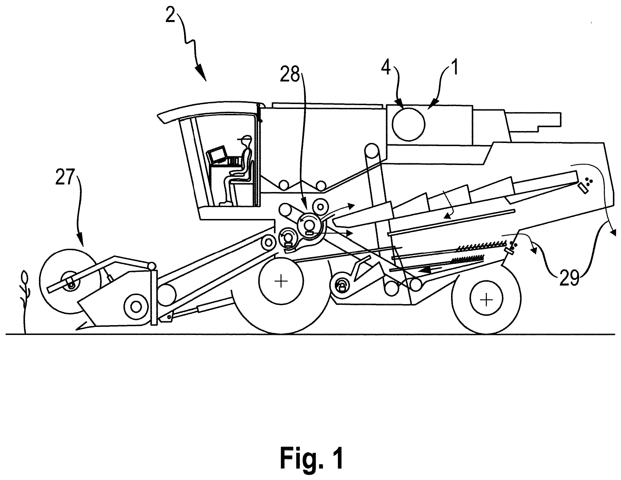

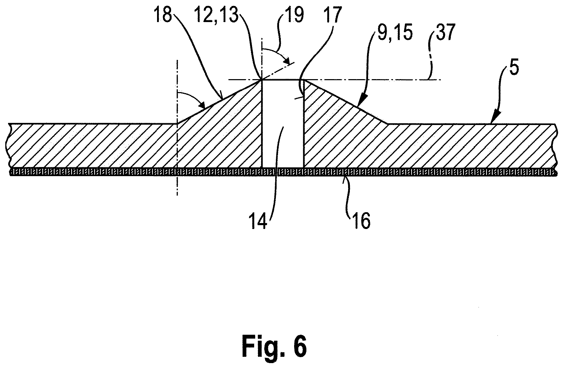

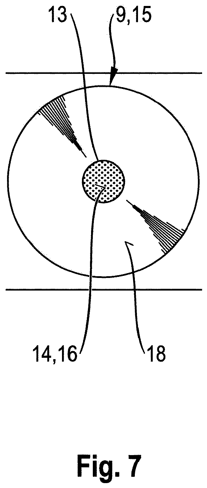

Ein Ausführungsbeispiel, das in den **Figuren 1 bis 7** veranschaulicht ist, betrifft eine erfindungsgemäße Kühleinrichtung **1**, die für eine landwirtschaftliche Erntemaschine **2** geeignet ist. Eine solche Erntemaschine **2** ist in einem Querschnitt in **Figur 1** dargestellt, wobei die Erntemaschine **2** hier von einem Mähdrescher gebildet ist. Dieser verfügt an einem vorderen Ende über ein Schneidwerk 27sowie eine Dreschtrommel **28**. Mittels des Schneidwerks **27** sind Pflanzen schneidbar, die sodann ausgehend von dem Schneidwerk **27** mittels eines Schrägförderers **38** in Richtung auf die Dreschtrommel **28** zuleitbar sind. Mittels der Dreschtrommel **28** werden Früchte der Pflanzen von Pflanzenresten gelöst, woraufhin zumindest ein Teil der Früchte und Pflanzenreste gemeinsam einer der Dreschtrommel **28** nachgeschalteten Trenneinrichtung **39** zugeleitet werden. Diese ist dazu geeignet, die Früchte von den Pflanzenresten zu trennen, sodass die Früchte gesondert in einen Korntank **40** leitbar und dort sammelbar und die Pflanzenreste an einer Rückseite der Erntemaschine **2** auswerfbar sind. Letzteres ist in **Figur 1** mittels dortiger Pfeile **29** veranschaulicht.

Die Arbeitsorgane der Erntemaschine **2** werden in dem gezeigten Beispiel mittels einer in den Figuren nicht dargestellten Verbrennungskraftmaschine angetrieben. Diese Verbrennungskraftmaschine bedarf einer Kühlung, die mittels der Kühleinrichtung **1** bewerkstelligt wird. Hierzu verfügt die Kühleinrichtung **1** über einen an einer Schwenktür **30** der Verbrennungskraftmaschine angeordneten Kühlerkorb **4**, der um eine Rotationsachse **3** rotierbar gelagert ist. Die Schwenktür **30** bietet eine Revisionsmöglichkeit für die Verbrennungskraftmaschine. Der Kühlerkorb **4** ist topfförmig ausgebildet, sodass er eine kreisplattenförmige Stirnfläche **7** sowie eine sich unter einem Winkel gegenüber der Stirnfläche **7** erstreckende, umlaufende Umfangsfläche **8** verfügt. In dem gezeigten Beispiel ist die Stirnfläche **7** eben ausgebildet, wobei sich die Umfangsfläche **8** unter einem rechten Winkel an die Stirnfläche **7** anschließt. In der Darstellung gemäß **Figur 1** ist die Stirnfläche **7** des Kühlerkorbs **4** sichtbar. Die Stirnfläche **7** und die Umfangsfläche **8** sind jeweils als Siebfläche **16** ausgebildet, mittels derer ein Kühlluftvolumenstrom, der von einer Umgebung **41** her durch den Kühlerkorb **4** in Richtung der Verbrennungskraftmaschine strömt, siebbar ist. Die Ausgestaltung der Stirnfläche **7** und der Umfangsfläche **8** als Siebfläche **16** ist erforderlich, um Schmutzpartikel, die sich infolge des Erntevorgangs in der Umgebungsluft befinden, zurückzuhalten, sodass der der Verbrennungskraftmaschine zugeleitete Kühlluftvolumenstrom möglichst frei von diesen Schmutzpartikeln ist. Die Schmutzpartikel stammen insbesondere aus den Pflanzenresten, die an der Rückseite der Erntemaschine **2** ausgeworfen werden. Bei einer als Feldhäcksler ausgebildeten Erntemaschine ist es ebenso typisch, dass Blätter, beispielsweise von Maispflanzen, von der Kühleinrichtung **1** angesogen werden und sich auf die Siebfläche **16** setzen.

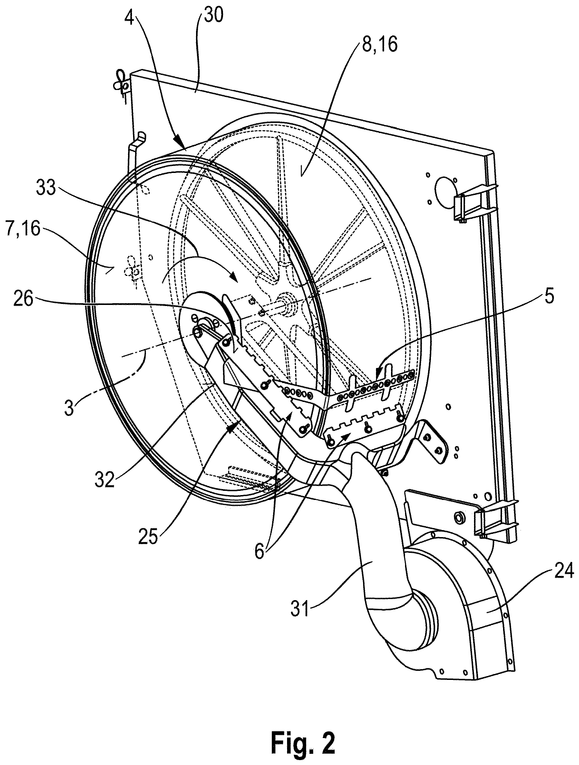

Um die Durchströmung der Siebfläche **16** und die damit einhergehende Leitung des Kühlluftvolumenstroms zu der Verbrennungskraftmaschine **1** dauerhaft sicherstellen zu können, ist es erforderlich, die Siebfläche **16** fortwährend abzureinigen. Hierzu verfügt die Kühleinrichtung **1** über einen Abstreifer **5** sowie zwei mit dem Abstreifer **5** zusammenwirkende Gegenkämme **6**. Der Abstreifer **5** ist in dem gezeigten Beispiel L-förmig ausgebildet, wobei sich ein erster Wirkungsabschnitt des Abstreifers **5** entlang der Stirnfläche **7** des Kühlerkorbs **4** und ein zweiter Wirkungsabschnitt des Abstreifers **5** entlang der Umfangsfläche **8** des Kühlerkorbs **4** erstrecken. Dies ergibt sich besonders gut anhand der Darstellung gemäß **Figur 2**. Der Abstreifer **5** ist fest mit dem Kühlerkorb **4** verbunden, sodass er im Zuge einer Rotation des Kühlerkorbs **4** um die Rotationsachse **3** mitrotiert. Mithin findet keine Relativbewegung zwischen dem Abstreifer **5** und dem Kühlerkorb **4** statt. Der Abstreifer **5** hat die Aufgabe, Schmutzpartikel zu erfassen und gemeinsam den Gegenkämmen **6** zuzuführen.

In dem gezeigten Beispiel umfasst die Kühleinrichtung **1** zwei Gegenkämme **6**, wobei der erste Gegenkamm **6** mit dem Wirkungsabschnitt des Abstreifers **5** zusammenwirkt, der der Stirnfläche **7** des Kühlerkorbs **4** zugeordnet ist, und der zweite Gegenkamm **6** mit dem Wirkungsabschnitt des Abstreifers **5** zusammenwirkt, der der Umfangsfläche **8** des Kühlerkorbs **4** zugeordnet ist. Die Gegenkämme **6** weisen jeweils eine Mehrzahl von Fingern **10** auf, die sich ausgehend von einer Basis des jeweiligen Gegenkamms **6** in Richtung auf die zugeordnete Siebfläche **16** zu erstrecken. Die Finger **10** der Gegenkämme **6** sind dazu geeignet, mit Zwischenräumen **11** zusammenzuwirken, die sich zwischen benachbarten Erhebungen **9** der Abstreifer **5** erstrecken. Besagte Erhebungen **9**, von denen der Abstreifer **5** eine Mehrzahl aufweist, erstrecken sich jeweils ausgehend von einer Basis des Abstreifers **5** in eine von der Siebfläche **16** abgewandte Richtung. In dem gezeigten Beispiel sind die Erhebungen **9** jeweils nebeneinander an dem Abstreifer **5** angeordnet. Die Gegenkämme **6** und der Abstreifer **5** sind dabei derart aufeinander abgestimmt, dass die Finger **10** der Gegenkämme **6** die Zwischenräume **11** zwischen benachbarten Erhebungen **9** der Abstreifer **5** im Zuge der Bewegung des Abstreifers **5** an den Gegenkämmen **6** vorbei durchsetzen. Hierzu sind die Gegenkämme **6** bezogen auf den Kühlerkorb **4** ortsfest angeordnet, sodass sie der Rotation des Kühlerkorbs **4** um die Rotationsachse **3** nicht folgen. Mithin führt die Rotation des Kühlerkorbs **4** gemeinsam mit dem Abstreifer **5** dazu, dass sich der Abstreifer **5** relativ zu den Gegenkämmen **6** bewegt und pro Umdrehung des Kühlerkorbs **4** um die Rotationsachse **3** die Gegenkämme **6** einmal passiert. Bei jeder Umdrehung des Kühlerkorbs **4** durchsetzen folglich die Finger **10** der Gegenkämme **6** die Zwischenräume **11** zwischen den benachbarten Erhebungen **9** des Abstreifers **5** ein Mal.

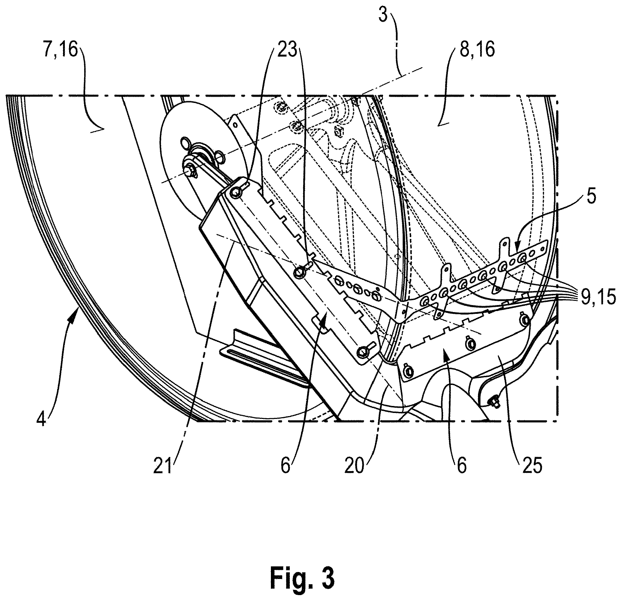

Die Erhebungen **9** des Abstreifers **5** sind - wie sich insbesondere anhand der **Figuren 3 bis 7** ergibt - in dem gezeigten Beispiel jeweils von einem Konusstumpf **15** gebildet. Die Konusstümpfe **15** sind in dem gezeigten Beispiel jeweils von Kegelstümpfen gebildet, die sich ausgehend von der Basis des Abstreifers **5** in Richtung der Gegenkämme **6** erstrecken. Hierbei sind die Konusstümpfe **15** derart orientiert, dass sie sich ausgehend von der Basis des Abstreifers **5** in die von der Siebfläche **16** abgewandte Richtung verjüngen. Auf diese Weise wird eine äußere Mantelfläche **18** eines jeweiligen Konusstumpfs **15** gewissermaßen als eine Ableitfläche nutzbar, mittels derer etwaige Schmutzpartikel in eine von der Siebfläche **16** abgewandte Richtung abweisbar sind. Hierdurch wird insbesondere ein Stau von Schmutzpartikeln an den Erhebungen **9** vermieden, der im Stand der Technik auftreten kann.

In besonders vorteilhafter Weise sind die Erhebungen **9** in dem gezeigten Beispiel vollhohl ausgebildet, wobei die Erhebungen **9** jeweils eine Ausnehmung **14** aufweisen, die die jeweilige Erhebung **9** in eine zu der Siebfläche **16** senkrechte Richtung vollständig durchdringt. Die Erhebungen **9** umfassen an ihrer jeweiligen Ausnehmung **14** folglich eine innere Mantelfläche **17**, die sich unter einem Winkel relativ zu der äußeren Mantelfläche **18** der jeweiligen Erhebung **9** erstreckt. An einem der Siebfläche **16** abgewandten Ende **12** einer jeweiligen Erhebung **9** grenzen die innere Mantelfläche **17** und die äußere Mantelfläche **18** aneinander und bilden dort gemeinsam eine innerhalb einer zu der Siebfläche **16** parallelen Ebene **37** eine Schneidkante **13** aus. Aufgrund der Ausgestaltung der Konusstümpfe **15** in Form von Kegelstümpfen sind die Schneidkanten **13** hier kreisförmig ausgebildet.

In dem gezeigten Beispiel sind die Erhebungen **9** jeweils von einer Stanzung gebildet, die mittels Stanzens hergestellt sind. Auf diese Weise ist zum einen die die jeweilige Erhebung **9** vollständig durchdringende Ausnehmung **14** und zum anderen die Konusstumpfform besonders einfach erzeugbar, wobei zudem die Schneidkante **13** als Übergang von der inneren Mantelfläche **17** hin zu der äußeren Mantelfläche **18** besonders scharfkantig ausgebildet werden kann. Die Ausbildung einer solchen scharfen Schneidkante **13** hat den Vorteil, dass etwaige Partikel im Zuge des Eingriffs des Abstreifers **5** mit einem jeweiligen Gegenkamm **6** mittels der Schneidkante **13** zerschnitten und auf diese Weise zerkleinert werden können. Diese Zerkleinerung ist im Hinblick auf eine Absaugung der Partikel mittels einer Absaugeinrichtung besonders vorteilhaft.

Die Form eines jeweiligen Konusstumpfs **15** ist in dem gezeigten Beispiel derart ausgebildet, dass die äußere Mantelfläche **18** mit einer Orthogonalen **44**, die senkrecht zu der Basis des Abstreifers **5** an einem Fuß **45** des jeweiligen Konusstumpfs **15** angeordnet ist, einen Winkel **19** von ca. 50° einschließt. Die Konusstümpfe **15** sind mithin vergleichsweise flach, sodass sie die gewünschte Ableitwirkung weg von der Siebfläche **16** besonders gut erzielen. Die Konusstümpfe **15** sind jeweils in einem Abstand **36** zueinander angeordnet, wobei sich zwischen benachbarten Konusstümpfen **15** jeweils einer der Zwischenräume **11** erstreckt. Die Finger **10** der Gegenkämme **6** sind gleichermaßen in dem Abstand **36** zueinander angeordnet, sodass die Finger **10** die Zwischenräume **11** im Zuge des Passierens des Abstreifers **5** bezogen auf die Gegenkämme **6** mittig durchsetzen.

Die Kühleinrichtung **1** umfasst in dem gezeigten Beispiel ferner eine Absaugeinrichtung **24**, die ortsfest bezogen auf den Kühlerkorb **4** angeordnet ist. Die Absaugeinrichtung **24** wirkt mit einem Absaugrohr **31** zusammen, das an einem dem Kühlerkorb **4** zugeordneten Ende mit einem Gehäuse **25** zusammenwirkt. Das Gehäuse **25** ist vergleichbar zu dem Abstreifer **5** L-förmig ausgebildet, sodass es sich sowohl radial bezogen auf die Rotationsachse **3** des Kühlerkorbs **4** entlang der Stirnfläche **7** als auch entlang der Umfangsfläche **8** des Kühlerkorbs **4** erstreckt. Die Absaugeinrichtung **24** weist ein Gebläse auf, mittels dessen an dem Gehäuse **25** ein Unterdruck erzeugbar ist, sodass von der Siebfläche **16** anhaftende Schmutzpartikel absaugbar sind. Dieses Absaugen ist umso leichter, desto kleiner die Schmutzpartikel sind. Mithin ist es besonders vorteilhaft, dass etwaige Schmutzpartikel infolge des Zusammenwirkens des Abstreifers **5** mit den Gegenkämmen **6** zerkleinerbar sind. In dem gezeigten Beispiel sind die Gegenkämme **6** unmittelbar an dem Gehäuse **25** der Absaugeinrichtung **24** angeordnet, wobei die Gegenkämme **6** einer Vorderseite **26** des Gehäuses **25** zugeordnet sind. Diese Vorderseite **26** ist dadurch gekennzeichnet, dass der Abstreifer **5** im Zuge einer Rotation des Kühlerkorbs **4** in der in **Figur 2** veranschaulichten Drehrichtung **33**, die dem Uhrzeigersinn entspricht, im Zuge des Vorbeiführens des Abstreifers **5** an dem Gehäuse **25** zunächst mit dem Gegenkämmen **6** eingreift, bevor der Abstreifer **5** in den Wirkungsbereich der Absaugeinrichtung **24** eintritt. Letzterer erstreckt sich unterhalb des Gehäuses **25**. Der Abstreifer **5** tritt schließlich gewissermaßen an einer Rückseite **32** des Gehäuses **25** wieder unter dem Gehäuse **25** hervor.

Um die Wirkung der Gegenkämme **6** bezogen auf den Abstreifer **5** einstellen zu können, sind die Gegenkämme **6** mittels Langlöchern **23** an dem Gehäuse **25** montiert. Die Langlöcher **23** ermöglichen eine Verstellbarkeit der Gegenkämme **6**, sodass ein Abstand zwischen dem Abstreifer **5** und den Gegenkämmen **6** besonders einfach einstellbar ist. Diese Einstellung hat sodann eine unmittelbare Auswirkung auf die Zerkleinerungswirkung der Gegenkämme **6**, wobei eine umso engere Führung von Gegenkämmen **6** und Abstreifer **5** einen geringeren Ausweichspalt zwischen beiden Bauteilen bedingt. Folglich für eine engere Führung zu einer wirksameren Zerkleinerung etwaiger Schmutzpartikel.

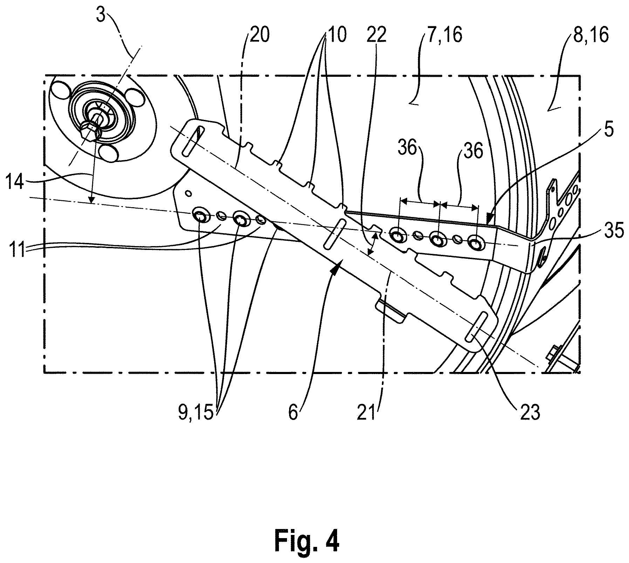

Im Übrigen ist die gezeigte Kühleinrichtung **1** insofern besonders vorteilhaft, als der der Stirnfläche **7** zugeordnete Gegenkamm **6** und der zugeordnete Wirkungsabschnitt des Abstreifers **5** unter einem Winkel **22** gegeneinander ausgerichtet sind. Dies ergibt sich besonders gut anhand von **Figur 4**. Diese Ausgestaltung schlägt sich darin nieder, dass eine Längsachse **21** des der Stirnfläche **7** zugeordneten Wirkungsabschnitts des Abstreifers **5** und eine Längsachse **20** des zugeordneten Gegenkamms **6** gemeinsam den Winkel **22** einschließen. Dieser Winkel **22** ergibt sich geometrisch gesehen zwischen Projektionen der Längsachse **20** des Gegenkamms **6** und der Längsachse **21** des Wirkungsabschnitts des Abstreifers **5** in die Siebfläche **16** bzw. die Stirnfläche **7** des Kühlerkorbs **4**. In dem gezeigten Beispiel beträgt der Winkel **22** ca. 25°. Die gezeigte Ausgestaltung hat den Vorteil, dass die Finger **10** des Gegenkamms **6** die Zwischenräume **11** zwischen den benachbarten Erhebungen **9** nicht gleichzeitig bzw. "auf einen Schlag" beim Passieren des Abstreifers **5** durchsetzen, sondern gewissermaßen zeitlich nacheinander mit dem Abstreifer **5** zusammenwirken. Ein sich infolge des Zusammenwirkens einstellender Widerstand tritt mithin nicht konzentriert auf einmal auf, sondern wird über einen Wirkungszeitraum verteilt, über den hinweg der Abstreifer **5** an dem Gegenkamm **6** vorbeigeführt wird.

Weiterhin ist der Abstreifer **5** in dem gezeigten Beispiel derart ausgebildet, dass sein der Stirnfläche **7** zugewandter Wirkungsabschnitt ausmittig bezogen auf die Rotationsachse **3** des Kühlerkorbs **4** angeordnet ist. Dies ergibt sich gleichermaßen besonders gut anhand von **Figur 4**. Dort ist ersichtlich, dass die Längsachse **21** des der Stirnfläche **7** zugeordneten Wirkungsabschnitts des Abstreifers **5** einen Abstand **34** zu einem Durchstoßpunkt **42** der Rotationsachse **3** durch die Stirnfläche **7** des Kühlerkorbs **4** aufweist. Diese Ausgestaltung hat zur Folge, dass sich der der Stirnfläche **7** zugeordnete Wirkungsabschnitt des Abstreifers **5** nicht rein radial bezogen auf die Rotationsachse **3** erstreckt. Die hierdurch erreichte "Vorbeiführung" des Wirkungsabschnitts an der Rotationsachse **3** ermöglicht es, besagten Wirkungsabschnitt etwas länger auszubilden als dies möglich wäre, wenn sich die Längsachse **21** des Wirkungsabschnitts mit der Rotationsachse **3** schneiden würde. Hierdurch wird letztlich das Ziel erreicht, dass ein Wirkungsbereich des Abstreifers **5** auf der Stirnfläche **7** vergrößert ist.

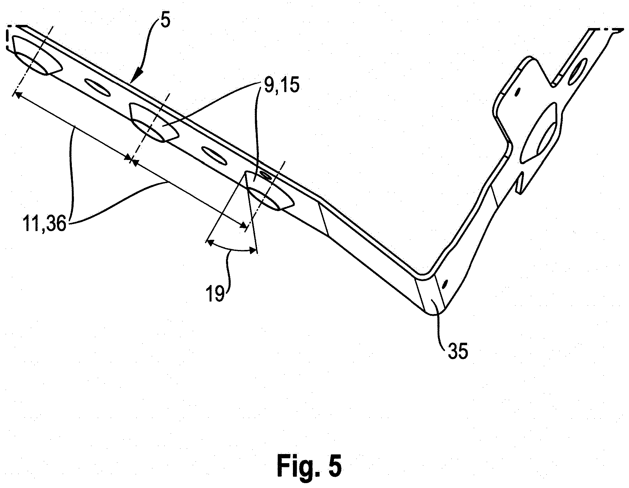

Der Abstreifer **5** ist an einem Übergang von der Stirnfläche **7** hin zu der Umfangsfläche **8** des Kühlerkorbs **4** mittels eines Knicks **35** umgelenkt, sodass der Abstreifer **5** die beschriebene L-Form aufweist. Diese ergibt sich besonders gut anhand von **Figur 5**. Der Abstreifer **5** weist eine Mehrzahl von Bohrungen **43** auf, die über seine Länge hinweg verteilt angeordnet sind. Diese Bohrungen **43** dienen dazu, den Abstreifer **5** mittels entsprechender Befestigungsmittel an dem Kühlerkorb **4** in Kraft übertragender Weise zu montieren, wobei die räumliche Entzerrung der Bohrungen **43** dazu beiträgt, dass Lagerkräfte des Abstreifers **5** soweit möglich verteilt in den Kühlerkorb **4** eingeleitet werden. Dies hat den Vorteil, dass punktuelle mechanische Belastungen des Kühlerkorbs **4** möglichst gering gehalten werden.

### Bezugszeichenliste

- 1: Kühleinrichtung
- 2: Erntemaschine
- 3: Rotationsachse
- 4: Kühlerkorb
- 5: Abstreifer
- 6: Gegenkamm
- 7: Stirnfläche
- 8: Umfangsfläche
- 9: Erhebung
- 10: Finger
- 11: Zwischenraum
- 12: Ende
- 13: Schneidkante
- 14: Ausnehmung
- 15: Konusstumpf
- 16: Siebfläche
- 17: Mantelfläche
- 18: Mantelfläche
- 19: Winkel
- 20: Längsachse
- 21: Längsachse
- 22: Winkel
- 23: Langloch
- 24: Absaugeinrichtung
- 25: Gehäuse
- 26: Vorderseite
- 27: Arbeitsorgan
- 28: Arbeitsorgan
- 29: Pflanzenreste
- 30: Schwenktür
- 31: Absaugrohr
- 32: Rückseite
- 33: Drehrichtung
- 34: Ausmitte
- 35: Knick
- 36: Abstand
- 37: Ebene
- 38: Schrägförderer
- 39: Trenneinrichtung
- 40: Korntank
- 41: Umgebung
- 42: Durchstoßpunkt
- 43: Bohrung
- 44: Orthogonale
- 45: Fuß

## Patentansprüche

1. Kühleinrichtung (1) für eine landwirtschaftliche Erntemaschine (2), umfassend
- einen um eine Rotationsachse (3) rotierbaren Kühlerkorb (4),
- mindestens einen Abstreifer (5) sowie
- mindestens einen Gegenkamm (6),
wobei der Kühlerkorb (4) topfförmig ausgebildet ist, sodass er eine Stirnfläche (7) sowie eine sich unter einem Winkel zu der Stirnfläche (7) erstreckende, umlaufende Umfangsfläche (8) aufweist,
wobei der Kühlerkorb (4) im Bereich seiner Stirnfläche (7) sowie seiner Umfangsfläche (8) jeweils zumindest teilweise von einer Siebfläche (16) gebildet ist, durch die hindurch ein Kühlluftvolumenstrom von einer Umgebung her in einen Innenraum des Kühlerkorbs (4) einströmen kann,
wobei der Abstreifer (5) derart fest mit dem Kühlerkorb (4) verbunden ist, dass er mit dem Kühlerkorb (4) mitrotierbar ist,
wobei der Abstreifer (5) eine Mehrzahl voneinander beabstandeter Erhebungen (9) aufweist,
wobei der Gegenkamm (6) relativ zu dem Kühlerkorb (4) betrachtet ortsfest angeordnet ist, sodass der Kühlerkorb (4) relativ zu dem Gegenkamm (6) rotierbar ist,
wobei der Gegenkamm (6) eine Mehrzahl von Fingern (10) aufweist, mittels derer der Gegenkamm (6) und der Abstreifer (5) im Zuge der Rotation des Kühlerkorbs (4) miteinander kämmen, sodass die Finger (10) des Gegenkamms (6) Zwischenräume (11) zwischen benachbarten Erhebungen (9) des mit dem Kühlerkorb (4) mitrotierenden Abstreifers (5) durchsetzen,
**dadurch gekennzeichnet, dass**
der Abstreifer (5) auf der Stirnfläche (7) und der Umfangsfläche (8) des Kühlerkorbs (4) angeordnet ist,
wobei zumindest eine Erhebung (9) des Abstreifers (5) von einem Konusstumpf (15) gebildet ist.

2. Kühleinrichtung (1) nach Anspruch 1, **dadurch gekennzeichnet, dass** der Konusstumpf (15) eine Ausnehmung (14) aufweist und auf diese Weise zumindest teilhohl ausgebildet ist, wobei der Konusstumpf (15) an seinem von der Siebfläche (16) abgewandten Ende (12) eine umlaufende Schneidkante (13) aufweist.

3. Kühleinrichtung (1) nach Anspruch 2, **dadurch gekennzeichnet, dass** die Ausnehmung (14) den Abstreifer (5) im Bereich der Erhebung (9) vollständig durchdringt, sodass der Konusstumpf (15) vollhohl ausgebildet ist.

4. Kühleinrichtung (1) nach Anspruch 2 oder 3, **dadurch gekennzeichnet, dass** eine innere Mantelfläche (17) des Konusstumpfs (15) im Bereich der Ausnehmung (14) und eine äußere Mantelfläche (18) des Konusstumpfs (15) gemeinsam einen Winkel (19) von mindestens 35°, vorzugsweise mindestens 40°, weiter vorzugsweise mindestens 45°, aufweisen.

5. Kühleinrichtung (1) nach einem der Ansprüche 1 bis 4, **dadurch gekennzeichnet, dass** der Konusstumpf (15) von einer Stanzung gebildet ist, die den Abstreifer (5) in Richtung von der Siebfläche (16) weg durchdringt.

6. Kühleinrichtung (1) nach einem der Ansprüche 1 bis 5, **dadurch gekennzeichnet, dass** eine Längsachse (20) des Gegenkamms (6) und eine Längsachse (21) eines mit dem Gegenkamm (6) zusammenwirkenden Wirkungsabschnitts des Abstreifers (5) gegeneinander geneigt ausgebildet sind, wobei vorzugsweise Projektionen der Längsachsen (20, 21) in die mit dem Abstreifer (5) zusammenwirkende Siebfläche (16) gemeinsam einen Winkel (22) von mindestens 10°, vorzugsweise mindestens 15°, weiter vorzugsweise mindestens 20°, einschließen.

7. Kühleinrichtung (1) nach einem der Ansprüche 1 bis 6, **dadurch gekennzeichnet, dass** zumindest ein mit der Stirnfläche (7) des Kühlerkorbs (4) korrespondierender Wirkungsabschnitt des Abstreifers (5) in sich gerade ausgebildet ist.

8. Kühleinrichtung (1) nach Anspruch 7, **dadurch gekennzeichnet, dass** eine Längsachse (21) des mit der Stirnfläche (7) zusammenwirkenden Wirkungsabschnitts ausmittig bezogen auf die Rotationsachse (3) des Kühlerkorbs (4) verläuft.

9. Kühleinrichtung (1) nach einem der Ansprüche 1 bis 8, **dadurch gekennzeichnet, dass** der Gegenkamm (6) mindestens zwei Langlöcher (23) aufweist, mittels derer ein Abstand des Gegenkamms (6) zu der jeweils zugeordneten Siebfläche (16) einstellbar ist.

10. Kühleinrichtung (1) nach einem der Ansprüche 1 bis 9, **gekennzeichnet durch** eine Absaugeinrichtung (24), mittels derer an der Siebfläche (16) anhaftende Partikel absaugbar sind.

11. Kühleinrichtung (1) nach Anspruch 10, **dadurch gekennzeichnet, dass** der Gegenkamm (6) einem Gehäuse (25) der Absaugeinrichtung (24) zugeordnet ist, wobei vorzugsweise der Gegenkamm (6) - in Rotationsrichtung des Kühlerkorbes (4) betrachtet - an einer Vorderseite (26) des Gehäuses (25) angeordnet ist.

## Claims

1. A cooling device (1) for an agricultural harvesting machine (2), comprising
- a radiator screen (4) which is rotatable about an axis of rotation,
- at least one scraper (5), as well as
- at least one counter-comb (6),
wherein the radiator screen (4) is dish-shaped in configuration, so that it has a front surface (7) as well as a continuous circumferential surface (8) which extends at an angle to the front surface (7),
wherein, in the region of its front surface (7) as well as its circumferential surface (8), the radiator screen (4) is respectively formed, at least in part, by a screen surface (16) through which a volumetric flow of cooling air can flow from an environment into an interior of the radiator screen (4), wherein the scraper (5) is securely connected to the radiator screen (4) in a manner such that it can rotate with the radiator screen (4),
wherein the scraper (5) has a plurality of prominences (9) which are separated from each other,
wherein the counter-comb (6) is disposed in a stationary manner with respect to the radiator screen (4), so that the radiator screen (4) can be rotated relative to the counter-comb (6),
wherein the counter-comb (6) has a plurality of fingers (10) by means of which the counter-comb (6) and the scraper (5) comb each other during the rotation of the radiator screen (4), so that the fingers (10) of the counter-comb (6) pass through gaps (11) between adjacent prominences (9) of the scraper (5) which rotates with the radiator screen (4),
**characterized in that**
the scraper (5) is disposed on the front surface (7) and the circumferential surface (8) of the radiator screen (4),
wherein at least one prominence (9) of the scraper (5) is formed by a stump of a cone (15).

2. The cooling device (1) according to claim 1, **characterized in that** the cone stump (15) has a recess (14) and in this manner is at least partly hollow in configuration, wherein the cone stump (15) has a continuous cutting edge (13) at its end facing away from the screen surface (16).

3. The cooling device (1) according to claim 2, **characterized in that** the recess (14) penetrates completely through the scraper (5) in the region of the prominence (9) so that the cone stump (15) is completely hollow in configuration.

4. The cooling device (1) according to claim 2 or claim 3, **characterized in that** in the region of the recess (14), an inner curved surface (17) of the cone stump (15) and an outer curved surface (18) of the cone stump (15) together make an angle (19) of at least 35°, preferably at least 40°, more preferably at least 45°.

5. The cooling device (1) according to one of claims 1 to 4, **characterized in that** the cone stump (15) is formed by punching, which penetrates through the scraper (5) in the direction away from the screen surface (16).

6. The cooling device (1) according to one of claims 1 to 5, **characterized in that** a longitudinal axis (20) of the counter-comb (6) and a longitudinal axis (21) of a functional section of the scraper (5) which cooperates with the counter-comb (6) are inclined in opposite directions with respect to each other, wherein preferably, projections of the longitudinal axes (20, 21) into the screen surface (16) which cooperates with the scraper (5) together enclose an angle (22) of at least 10°, preferably at least 15°, more preferably at least 20°.

7. The cooling device (1) according to one of claims 1 to 6, **characterized in that** at least one functional section of the scraper (5) which corresponds to the front surface (7) of the radiator screen (4) is in itself straight in configuration.

8. The cooling device (1) according to claim 7, **characterized in that** a longitudinal axis (21) of the functional section which cooperates with the front surface (7) extends eccentrically with respect to the axis of rotation (3) of the radiator screen (4).

9. The cooling device (1) according to one of claims 1 to 8, **characterized in that** the counter-comb (6) has at least two longitudinal apertures (23) by means of which a distance from the counter-comb (6) to the respectively associated screen surface (16) can be adjusted.

10. The cooling device (1) according to one of claims 1 to 9, **characterized by** a suction device (24), by means of which particles which adhere to the screen surface (16) can be suctioned off.

11. The cooling device (1) according to claim 10, **characterized in that** the counter-comb (6) is associated with a housing (25) of the suction device (24), wherein preferably, the counter-comb (6) - observed in the direction of rotation of the radiator screen (4) - is disposed on a front side (26) of the housing (25).

## Revendications

1. Équipement de refroidissement (1) pour une machine agricole de récolte (2), incluant
- un tamis de radiateur (4) tournant autour d'un axe de rotation (3),
- au moins un racleur (5) ainsi que
- au moins un contre-peigne (6),
le tamis de radiateur (4) étant conçu en forme de pot, de sorte qu'il comporte une face frontale (7) ainsi qu'une surface périphérique tournante (8) s'étendant selon un angle par rapport à la face frontale (7),
le tamis de radiateur (4) étant formé, dans la zone de sa face frontale (7) ainsi que de sa surface périphérique (8), respectivement au moins en partie par une surface de tamis (16) à travers laquelle un flux volumique d'air de refroidissement peut pénétrer dans un espace intérieur du tamis de radiateur (4) à partir d'un environnement,
le racleur (5) étant solidarisé au tamis de radiateur (4), de façon qu'il puisse tourner avec le tamis de radiateur (4),
le racleur (5) comportant une pluralité de reliefs (9) distants les uns des autres,
le contre-peigne (6) étant disposé en position fixe considéré relativement au tamis de radiateur (4), de sorte que le tamis de radiateur (4) est rotatif par rapport au contre-peigne (6),
le contre-peigne (6) comportant une pluralité de doigts (10) au moyen desquels le contre-peigne (6) et le racleur (5) s'emboîtent l'un dans l'autre au cours de la rotation du tamis de radiateur (4), de sorte que les doigts (10) du contre-peigne (6) traversent des interstices (11) entre des reliefs voisins (9) du racleur (5) tournant avec le tamis de radiateur (4),
**caractérisé en ce que**
le racleur (5) est disposé sur la face frontale (7) et sur la surface périphérique (8) du tamis de radiateur (4),
au moins un relief (9) du racleur (5) étant formé par un cône tronqué (15).

2. Équipement de refroidissement (1) selon la revendication 1, **caractérisé en ce que** le cône tronqué (15) comporte un évidement (14) et est ainsi conçu de manière au moins partiellement creuse, le cône tronqué (15) comportant, à son extrémité (12) située à l'opposé de la surface de tamis (16), une arête de coupe tournante (13).

3. Équipement de refroidissement (1) selon la revendication 2, **caractérisé en ce que** l'évidement (14) traverse entièrement le racleur (5) dans la zone du relief (9), de sorte que le cône tronqué (15) est conçu de manière entièrement creuse.

4. Équipement de refroidissement (1) selon la revendication 2 ou 3, **caractérisé en ce qu'**une surface latérale intérieure (17) du cône tronqué (15) dans la zone de l'évidement (14) et une surface latérale extérieure (18) du cône tronqué (15) présentent conjointement un angle (19) d'au moins 35°, préférentiellement d'au moins 40°, plus préférentiellement d'au moins 45°.

5. Équipement de refroidissement (1) selon une des revendications 1 à 4, **caractérisé en ce que** le cône tronqué (15) est formé par un poinçonnage qui traverse le racleur (5) en s'éloignant de la surface de tamis (16).

6. Équipement de refroidissement (1) selon une des revendications 1 à 5, **caractérisé en ce qu'**un axe longitudinal (20) du contre-peigne (6) et un axe longitudinal (21) d'une portion active du racleur (5) coopérant avec le contre-peigne (6) sont inclinés l'un par rapport à l'autre, préférentiellement des projections des axes longitudinaux (20, 21) dans la surface de tamis (16) coopérant avec le racleur (5) incluant conjointement un angle (22) d'au moins 10°, préférentiellement d'au moins 15°, plus préférentiellement d'au moins 20°.

7. Équipement de refroidissement (1) selon une des revendications 1 à 6, **caractérisé en ce qu'**au moins une portion active du racleur (5) correspondant avec la face frontale (7) du tamis de radiateur (4) est conçue de manière en soi rectiligne.

8. Équipement de refroidissement (1) selon la revendication 7, **caractérisé en ce qu'**un axe longitudinal (21) de la portion active coopérant avec la face frontale (7) s'étend de manière excentrée par rapport à l'axe de rotation (3) du tamis de radiateur (4).

9. Équipement de refroidissement (1) selon une des revendications 1 à 8, **caractérisé en ce que** le contre-peigne (6) comporte au moins deux trous oblongs (23) au moyen desquels un écartement du contre-peigne (6) par rapport à la surface de tamis respectivement associée (16) est réglable.

10. Équipement de refroidissement (1) selon une des revendications 1 à 9, **caractérisé par** un équipement d'aspiration (24) au moyen duquel des particules adhérant à la surface de tamis (16) sont aspirables.

11. Équipement de refroidissement (1) selon la revendication 10, **caractérisé en ce que** le contre-peigne (6) est associé à un carter (25) de l'équipement d'aspiration (24), préférentiellement le contre-peigne (6) - considéré dans la direction de rotation du tamis de radiateur (4) - étant disposé sur un côté avant (26) du carter (25).
